# NEUE EUROPÄISCHE PATENTSCHRIFT

(11) **EP 0 996 864 B2**
(45) Veröffentlichungstag und Bekanntmachung des Hinweises auf die Entscheidung über den Einspruch: **04.01.2012**
(45) Hinweis auf die Patenterteilung: 11.07.2007
(21) Anmeldenummer: 99923529.4
(22) Anmeldetag: 05.05.1999
(51) Int. Cl.: G02B 21/22, G02B 21/08

(54) **BELEUCHTUNGSANORDNUNG FÜR EIN STEREOMIKROSKOP**
LIGHTING SYSTEM FOR A STEREOMICROSCOPE
SYSTEME D'ECLAIRAGE POUR STEREOMICROSCOPE

(30) Priorität: 18.05.1998 DE 19822255
(43) Veröffentlichungstag der Anmeldung: 03.05.2000
(73) Patentinhaber: CARL ZEISS JENA GmbH, 07745 Jena (DE)
(72) Erfinder: KNOBLICH, Johannes, D-07747 Jena (DE)
(74) Vertreter: Schiffer, Axel Martin
(86) Internationale Anmeldenummer: PCT/EP1999/003070
(87) Internationale Veröffentlichungsnummer: WO 1999/060437

(56) Entgegenhaltungen:
- EP-A- 0 723 175
- EP-A- 0 793 128
- DE-A- 4 331 635
- DE-A1- 1 622 989
- DE-A1- 3 427 592
- DE-A1- 4 320 579
- DE-U- 1 733 938
- DE-U- 9 408 066
- DE-U1- 8 713 356
- DE-U1- 9 408 066
- DE-U1- 29 607 710
- US-A- 5 126 877
- Publikation der Patentinhaberin: "Operationsmikroskop OPMI MD, Produktinformation" Druckschrift Nr W 30-340-d, Publikationsvermerk V/87

## Beschreibung

In der Stereomikroskopie gehören zum Stand der Technik externe Auflicht - Beleuchtungsanordnungen, bei denen außerhalb des Mikroskop - Grundkörpers Direktbeleuchtungen angeordnet werden.
Das können Halogenlampen mit Reflektorspiegel sein, die am Stereomikroskop - Träger, an der Stativsäule oder am Stereomikroskop - Grundkörper selbst befestigt sind und eine schräge Auflichtbeleuchtung ermöglichen.
Es sind Kaltlichtbeleuchtungen bekannt, die beispielsweise an der Stativsäule oder am Stereomikroskop - Träger befestigt sind und z. B. in der Ausführung als flexible oder halbstarre ein- oder mehrarmige Lichtleiter mit Fokussieroptik vorliegen. Ohne Befestigung am Stereomikroskop - Grundkörper oder am Stativ gibt es ein- oder mehrarmige halbstarre, sog. Schwanenhälse, die ausschließlich an der Kaltlichtquelle befestigt sind und frei im Raum positioniert werden können.
Weiterhin sind im Stereomikroskop - Frontbereich befestigbare Kaltlicht - Ringleuchten bekannt, die z. B. als 4 - Punkt - Ringlicht oder als Spaltringlicht in unterschiedlichen Durchmessern und Abstrahlwinkeln angeboten werden. Alle diese externen Auflicht - Beleuchtungsanordnungen gewährleisten eine sehr differenzierte Auflichtbeleuchtung, d. h. das stereomikroskopische Objekt. kann entsprechend seiner Oberflächenstruktur und räumlichen Ausdehnung optimal "ausgeleuchtet" werden. Nachteilig bei diesen externen Beleuchtungsanordnungen ist der z. T. erhebliche Bauraum im Objektbereich, d. h. die direkte Sicht auf das Objekt und der Freiraum für Manipulationsaufgaben wird z. T. erheblich eingeschränkt.
Nachteilig ist bei diesen externen Beleuchtungsanordnungen weiterhin, daß bei der Befestigung des Stereomikroskops in Sonderstativen (z. B. Maschinenhalterungen Boden-oder Wandstativen) und der damit verbundenen freien Positionierung des Stereomikroskops im Raum das "Licht" immer erst separat "nachgeführt" werden muß (sofern die Beleuchtungsanordnung nicht am Stereomikroskop - Grundkörper selbst befestigt ist). Diese genannten Nachteile können vermieden werden, wenn es in geeigneter Weise gelingt, die Beleuchtungsanordnung selbst möglichst platzsparend im Stereomikroskop - Grundkörper zu integrieren.

International sind eine ganze Reihe verschiedenartige, z. T. bereits veröffentlichte Lösungsvorschläge bekannt, die das Ziel verfolgen, in geeigneter Weise in optischen Instrumenten (beispielsweise Fotokameras, Videokameras, Camcorder, Mikroskope, Stereomikroskope, Operationsmikroskope) Beleuchtungssysteme direkt zu integrieren.

In der Stereomikroskopie gehören zum Stand der Technik interne Auflicht - Beleuchtungsanordnungen, bei denen innerhalb des Mikroskop - Grundkörpers das Licht über geeignete Strahlteilelemente (Prismen, Teilerspiegel) in die Beobachtungskanäle eingekoppelt wird (koaxiales Auflichtprinzip). Dabei kann das Licht über eine konventionelle mikroskopische Auflichteinrichtung oder über Kaltlichtquelle und Lichtleiter erzeugt und transportiert werden bis es dann über die o. g. Strahlteilelemente an unterschiedlichen Stellen (z. B. oberhalb oder unterhalb des Stereomikroskop - Pankratsystems) in die Beobachtungskanäle eingekoppelt wird. Neben den im Stereomikroskop - Grundkörper fest integrierten o. g. koaxialen Beleuchtungsanordnungen gibt es auch modular aufgebaute Einheiten, die beispielsweise trennbar zwischen Stereomikroskop - Pankratsystem und Hauptobjektiv angeordnet werden können (z. B. Zeiss - Stereomikroskope in Teleskopbauweise mit modularer koaxialer Beleuchtungseinrichtung und flexibler Lichtleitereinkopplung, Lichtleiteranschluß an SCHOTT - Kaltlichtquelle KL 1500). Vorteilhaft bei der koaxialen Beleuchtungsanordnung ist die "Mitführung" des Lichtes mit dem Stereomikroskop - Grundkörper und bei interner Einkopplung oberhalb des stereoskopischen Pankratsystems eine exakte Objektfeldanpassung beim Zoomen. Bei interner Einkopplung unterhalb des stereoskopischen Pankratsystems ist das beleuchtete Objektfeld konstant groß und wird für das mit dem Pankraten maximal erreichbare Objektfeld ausgelegt. Nachteilig bei all den o. g. Anordnungen mit koaxialem Auflichtprinzip ist die Entstehung starker Reflexe - insbesondere bei stark reflektierenden Objektoberflächen - und eine damit verbundene Bild - Kontrastverschlechterung durch die Lichteinkopplung in die Beobachtungskanäle. Zum Stand der Technik gehören auch die verschiedenen Anordnungsmöglichkeiten zur Reflexunterdrückung mit polarisationsoptischen Mitteln (z. B. "Antiflexeinrichtung" für Zeiss - Stereomikroskope in Teleskopbauweise). Die bekannte Reflexunterdrückung mit polarisationsoptischen Mitteln hat seinerseits wiederum den Nachteil, daß durch das hohe Absorptionsvermögen der mindestens 2 notwendigen Polarisationsfilter eine erhebliche Verminderung der Beleuchtungsstärke stattfindet. Weitere, aus diesem Grundprinzip abgewandelte interne Auflicht - Beleuchtungsanordnungen benutzen bei Stereomikroskopen in Teleskopbauweise nur das vorgeschaltete Hauptobjektiv zur Lichteinkopplung in die Beobachtungsstrahlengänge oder in einer zu den Beobachtungskanälen unterschiedlichen azimutalen Einfallsebene. Auch bei diesen, vom Grundprinzip abgewandelten Anordnungen bleibt das Problem der Reflexentstehung und Reflexbeseitigung mit polarisationsoptischen Mitteln bestehen. Das koaxiale Auflichtprinzip wird in der Stereomikroskopie vorzugsweise nur bei ebenen und flachen Präparaten (geringe Tiefenausdehnung) angewendet, da bei Objekten mit Tiefenausdehnung bzw. Objekten mit Oberflächenrelief bei dieser senkrechten Beleuchtung nur ein schlechter Kontrast bzw. ein schlechter räumlicher Seheindruck erreichbar ist; ein wesentlich besserer Kontrast und Raumeindruck ist durch die bei einer schrägen Beleuchtung auftretenden Schattenwirkung erreichbar. Die oben beschriebenen verschiedenartigen, nach dem koaxialen Auflichtprinzip arbeitenden internen Beleuchtungsanordnungen werden in konventionellen Stereomikroskopen (Teleskopbauweise), in Operationsmikroskopen, in medizinischen Geräten mit stereoskopischer Beobachtung (Kolposkope, Spaltlampen) oder z. T. in Endoskopen eingesetzt.

Die Offenlegungsschrift DE 196 40 352 A1 "Innenbeleuchtungsvorrichtung und Videomikroskopsystem" beschreibt eine Anordnung der Lichteinkopplung über Strahlenteilung, wie sie in der konventionellen Hellfeld - Auflichtmikroskopie bekannt ist. Eine weitere Anordnung sieht die Integration einer Direktbeleuchtung (Lampe mit Reflektorspiegel) in ein Videogerät vor, wobei dann die Lichtübertragung über Lichtleiter in den Objektraum mit schräger Beleuchtung erfolgt bzw. eine nochmalige Lichtleitereinkopplung über eine Strahlenteilung in den Beobachtungskanal (koaxiales Auflichtprinzip) vorgesehen ist. Die vorgeschlagenen integrierten Beleuchtungsanordnungen, die z. T. Stand der Technik sind, beziehen sich nur auf die Kombination Videomikroskopsystem in Verbindung mit einem Videogerät.

In der Patentschrift "Operation Microscope" US 4,783,159 wird ein Operationsmikroskop in Teleskopbauweise beschrieben, in dem eine interne Beleuchtungsanordnung zur Beleuchtung des Operationsfeldes integriert wird. Dabei wird das Licht grundsätzlich zwischen Zoomsystem (Pankrat) und Hauptobjektiv eingekoppelt. Das im Operationsmikroskop separat aufgebaute Beleuchtungssystem beleuchtet das Operationsfeld über die optischen Elemente Lichtleiter → separates Zoomsystem → Projektionslinse → Hauptobjektiv. Durch den Einsatz verschiedener optischer Umlenkelemente (Reflexionsprismen) wird die Operationsfeldbeleuchtung über das Hauptobjektiv an verschiedenen Stellen (wahlweise axial oder außeraxial) möglich, was zu einer differenzierten Beleuchtung des Operationsgebietes führt (z. B. Auge).

In der Patentschrift "Illumination structure in microscope" EP 0 793 128 A1 wird ein Mikroskop (Stereomikroskop in Parallelbauweise / Makroskop) beschrieben, in dem hinter dem Objektiv ein internes Beleuchtungssystem angeordnet ist. Es werden verschiedene Anordnungen beschrieben, durch die die Lichteinkopplung hinter dem Objektiv erfolgen kann, beispielsweise auf der optischen Achse des Objektivs zwischen den Beobachtungskanälen (2 Paare) mit einem Beleuchtungskanal, zwischen den Beobachtungskanal - Paaren mit 2 oder mehreren Beleuchtungskanälen bzw. der Lichteinkopplung unter Benutzung von mittels Fassungen abgetrennter Bereiche der Beobachtungsoptik.

In der Patentschrift "Auflicht - Objektbeleuchtungseinrichtung" DE 39 06 555 A1 wird eine an einem Beobachtungsgerät angebrachte (externe) Beleuchtungseinrichtung beschrieben, die aus mehreren einzelnen, auch einzeln schaltbaren Lichtquellen (z. B. Selbstleuchter, Glasfasern oder von hinten leuchtende Blenden) bestehen und die in einem mindestens zweidimensionalen Array angeordnet sind, dessen Zentrum mit der optischen Achse der Beobachtungs - Abbildungsoptik übereinstimmt.

In der Patentschrift "Epidarkes Beleuchtungssystem" DE 32 29 768 A1 wird ein epidarkes Beleuchtungssystem vorzugsweise für Auflichtmikroskope beschrieben, bei dem von einer Lichtquelle ausgehendes Licht zur Beleuchtung eines Objektes zwischen einer Hülse und einer Objektivlinse durchgeleitet wird (Anordnung ähnlich wie bei Auflicht - Dunkelfeldanordnungen). Mit dieser ringförmigen Beleuchtungsanordnung kann eine sehr flache Beleuchtung des Objektfeldes erreicht werden.

In der Patentschrift "Microscope illuminating apparatus" EP 0 504 940 A2 werden verschiedene Mikroskop - Beleuchtungsanordnungen für Auflicht - Hell - und - Dunkelfeldbeleuchtung sowie für Durchlicht - Hell - und - Dunkelfeldbeleuchtung gezeigt, bei denen die Lichteinkopplung in die beleuchtungsoptischen Systeme unter anderem mit faseroptischen Mitteln durchgeführt wird. In der Patentschrift "Stereomikroskop" DE 19523712 A1 wird ein Stereomikroskop (Teleskopbauweise) beschrieben, welches eine Beobachtungs - Frontlinse und eine Beleuchtungslinse aufweist, die voneinander getrennt sind. Die fokussierbare Beobachtungs - Frontlinse richtet einen von einem Objektpunkt emittierten Strahl aus Beobachtungslicht parallel aus. Die Beleuchtungslinse projizierte einen Strahl aus Beleuchtungslicht auf den Objektpunkt. Durch die Anordnung / Fokussierung von Beobachtungs- und Beleuchtungslinse kann eine zu beleuchtende Position entsprechend der Bewegung eines Objektpunktes verändert werden. Ziel dieser speziellen Anordnung ist es, eine möglichst koaxiale Beleuchtung zu erreichen, d. h. einen möglichst kleinen Winkel zwischen der optischen Achse des Beleuchtungslichtes und der optischen Achse des Beobachtungslichtes (Vermeidung von Reflexen) einzustellen.

Das Deutsche Gebrauchsmuster DE 94 08 066 U offenbart ein Stereomikroskop vom Greenough-Typ, bei welchem die explizit vorgesehene Koaxialbeleuchtung bedingt durch mangelnden Bauraum (die beiden Objektive stoßen praktisch aneinander) unter einem geringen Winkel gegen die durch die Objektivstrahlengänge definierte Ebene erfolgt. Damit weist auch diese Anordnung die der Koaxialbeleuchtung immanenten Nachteile der Reflexbildung und Kontrastverschlechterung auf.

Der Erfindung liegt die Aufgabe zugrunde, für Stereomikroskope die Beleuchtungsanordnung so auszugestalten, daß sie mit minimalem Platzbedarf erfolgt und dennoch der optisch - mechanische Grundaufbau nur minimal beeinflußt wird und eine helle, homogene und reflexfreie Beleuchtung des maximal sichtbaren Objektfeldes unabhängig von der Lage und Beobachtungsrichtung des Stereomikroskopes ermöglicht wird.
Die Aufgabe wird durch die Merkmale der unabhängigen Ansprüche gelöst.
Bevorzugte Weiterbildungen sind Gegenstand der abhängigen Ansprüche.
Die Erfindung wird nachstehend anhand der schematischen Zeichnungen näher erläutert.
Es zeigen:
Fig. 1: Eine Unteransicht eines erfindungsgemäßen Stereomikroskopes
Fig. 2: Den erfindungsgemäß eingesetzten Lichtleiter
Fig. 3: Eine schematische aufgeschnittene Seitanansicht
Fig. 4: Eine Seitenansicht senkrecht zur Seitenansicht gemäß Fig.3
Fig. 5: Die erfindungsgemäßen Verstellmöglichkeiten der Beleuchtung
Fig. 6: Anordnung zur Kontrastierung, Beispiel Fluoreszenzanregung über die Spot-Beleuchtungseinrichtung
Durch die Integration einer von den Beobachtungsstrahlengängen vollständig getrennten faseroptischen Beleuchtungsanordnung mit Fokussieroptiken in den Stereomikroskop - Grundkörper, vorzugsweise der Anordnung zweier "Spots" in einer Ebene orthogonal zur Beobachtungsebene wird eine Anordnung erreicht, die der obenstehenden Aufgabenstellung genügt.

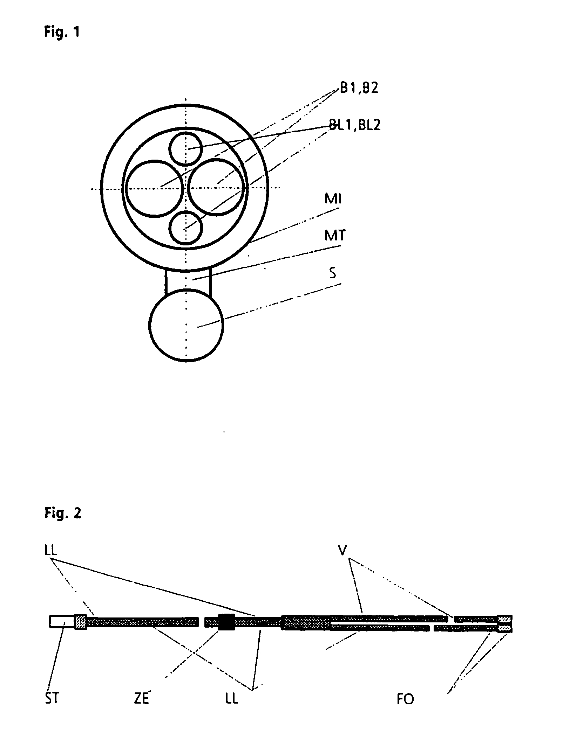

In Fig.1 sind B1, B2 die Austrittsöffnungen bzw. Objektivenden zweier Beobachtungskanäle eines Greenough- Stereomikroskopes MI in Richtung des Objektes.
Das Mikroskop MI ist über einen Mikroskopträger MT mit einem Stativ S verbunden.
Senkrecht zur Verbindungsachse der Beobachtungskanäle sind die Austrittsöffnungen BL1, BL2 zweier Lichtquellen angeordnet.

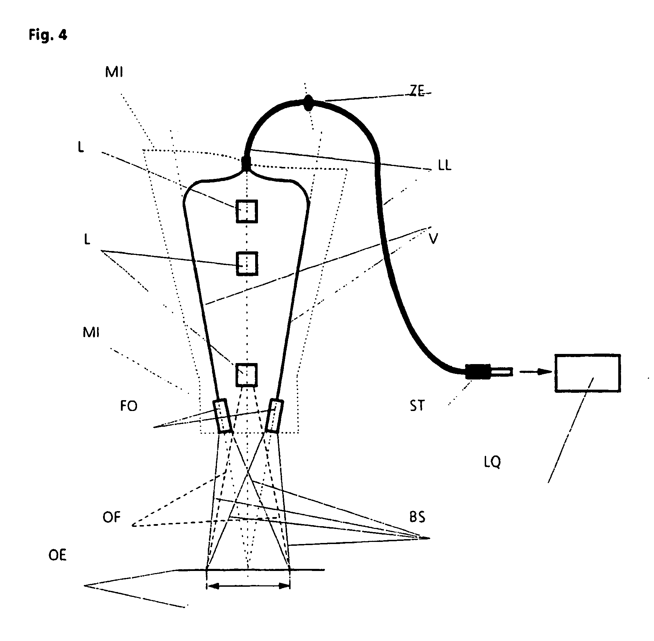

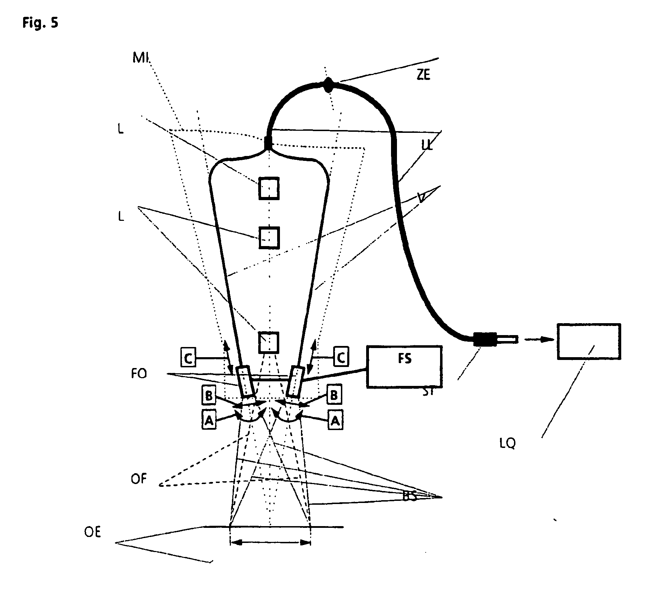

Durch diese orthogonale Anordnung der Beleuchtungskanäle wird eine störende Abbildung des Beleuchtungskanals nach Reflexion in der Objektebene (kritisch bei stark reflektierenden Objekten) in den zweiten Beobachtungskanal und eine damit verbundene Kontrastverschlechterung vermieden. Weiterhin ist zur Vermeidung von Reflexen im gesamten Stereomikroskop - Zoombereich bei hochreflektierenden Objekten und Verbesserung des "stereoskopischen Kontrastes" die Beleuchtungsanordnung , wie in Fig. 4, 5 dargestellt, unter einem Winkel ≠ 0°, d. h. unter einem Winkel von ≈ 10°... 12 ° (≡ Halbwinkel bis zur Mitte) zur optischen Achse des Mikroskopes erfindungsgemäß angeordnet. Den Lichtleitern vorgeschaltete Fokussieroptiken FO, die die Objektebene ausleuchten, sind erfindungsgemäß als Zoomsysteme (z. B. mit dem Beobachtungs - Zoomsystem mechanisch gekoppelt) mit variablem Objektfelddurchmesser ausgeführt.

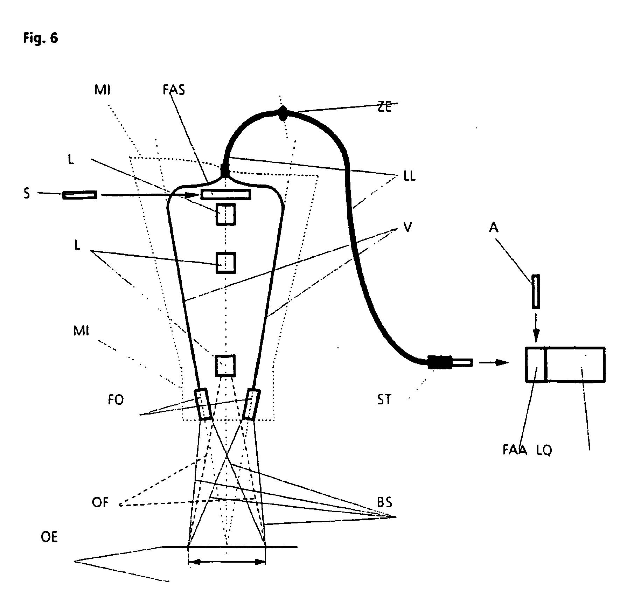

Zur Erreichung einer maximalen Beleuchtungsstärke in der Objektebene ist es vorteilhaft, wenn die Beleuchtung über einen mit Fokussieroptiken FO, versehenen Zwillingslichtleiter LL (s. Fig. 2) erfolgt und eine Überlagerung beider "Einzel. Spots" in der Objektebene stattfindet. Die beiden Einzelfaserbündel der Verzweigung V des flexiblen Zwillingslichtleiters LL vereinigen sich noch innerhalb des Stereomikroskop - Grundkörpers und verlassen als durchgehender (Vermeidung von Lichtverlusten), einarmiger und flexibler Lichtleiter - mit einer ausreichenden Länge versehen - über eine Zugentlastung ZE an geeigneter Stelle den Stereomikroskop - Grundkörper. Über ein standardisiertes Endstück ST wird der Lichtleiter dann mit einer externen Kaltlichtquelle LQ verbunden. Als flexible Lichtleiter können sowohl Glas - Lichtleiter oder Kunststoff - Lichtleiter als auch Flüssiglichtleiter (besonders vorteilhaft bei Fluoreszenzbeleuchtungsanordnungen, s. auch Fig. 6) verwendet werden.

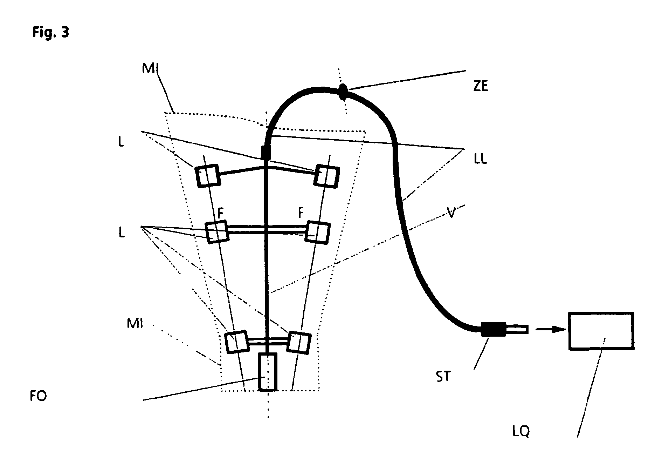

Eine mögliche Anordnung der integrierten faseroptischen Beleuchtungsanordnung in einem Stereomikroskop Greenoughscher Bauart in einer Ebene parallel zu der der Beobachtungskanäle (Schnittdarstellung durch einen Beleuchtungskanal) zeigt Fig. 3.
Das Mikroskop MI ist nur gestrichelt und ohne Tubus angedeutet.
Der Lichtleiter LL wird von oben in das Mikroskopgehäuse eingekoppelt und weist eine Zugentlastung ZE auf.
Sein verzweigter Teil V verläuft vorteilhaft vollständig im Innern des Mikroskopgehäuses zwischen den auf Führungen F beweglichen und teilweise feststehenden Linsengruppen L des Zoomsystems des Mikroskopes, ohne daß die Beobachtungsstrahlengänge hierdurch vignettiert würden..

In Fig. 4 wird dargestellt, daß die beiden mit Fokussieroptiken FO versehenen Lichtleiterenden einen Winkel zur optischen Achse des Mikroskopes einnehmen und sich dadurch vorteilhaft bezüglich ihrer Beleuchtungsspots BS überlagern, so daß eine gleichmäßige helle Ausleuchtung des Objektes in der Objektebene OE über das gesamte maximale Objektfeld OF erzielt wird.

Dieses Beleuchtungsprinzip eignet sich sowohl für die Stereomikroskope in Greenoughbauweise als auch prinzipiell für Stereomikroskope in Teleskopbauweise. Zur Vermeidung von Reflexen (Nachteil der bekannten koaxialen Stereomikroskop - Beleuchtungsanordnungen) kann die Beleuchtung auch außerhalb von Vorsatzsystemen (Greenoughsystemen) bzw. Objektiven (Teleskopsysteme, typische Beleuchtungsanordnungen für Operationsmikroskope) realisiert werden. Eine Festinstallation der Beleuchtungs - Fokussieroptiken, die nicht erfindungsgemäß ist, bringt eine optimale Ausleuchtung des Objektfeldes für das Stereomikroskop ohne Vorsatzsystem (Greenoughsche Bauart) bzw. nur für ein Vorsatzsytem / Objektiv. Für die Anpassung an verschiedene Objektive / Vorsatzsysteme ist ein Verschieben und Schwenken der Beleuchtungs - Fokussieroptiken mit mechanischen Führungs- und Stellelementen notwendig.
Dies ist in Fig. 5 dargestellt.

Hier sind in verschiedene Richtungen über Bedienelemente schwenkbare und radial verschiebbare und fokussierbare Beleuchtungsoptiken FO dargestellt. Die Beleuchtungsfokussierung, d. h. die variable Anpassung der Beleuchtungsspots an den beobachtbaren Objektfelddurchmesser, wird mit einer Fokussiersteuerung FS, die entweder mechanisch mit dem Beobachtungs - Zoomsystem gekoppelt ist oder elektronisch über eine Motorisierung durchgeführt wird, realisiert.
Unterschiedliche vorteilhafte Varianten werden nachstehend beschrieben.
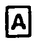 Schwenken der Beleuchtungs - Fokussieroptiken (Variation des Einfallswinkels der Licht - Spots in Verbindung mit 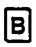 ), Betätigung mit geeigneten externen Bedienelementen
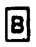 Radiale Verschiebung der Beleuchtungs - Fokussieroptiken (Variation des Einfallswinkels der Licht - Spots in Verbindung mit 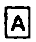 ), Betätigung mit geeigneten externen Bedienelementen
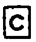 - Variation des beleuchteten Objektfelddurchmessers durch Fokussieren. Variation des Abstandes zwischen Lichtleiter. Ausgang und Fokussieroptik mit manueller Betätigung oder Lichtleitereinkopplung in ein separates Beleuchtungs - Zoomsystem, das mechanisch mit dem Beobachtungszoom zwangsgekoppelt ist oder durch eine externe Steuerung FS mit Motorantrieb betätigt wird

Hierbei kann vorteilhaft das Beleuchtungs - Fokussiersystem mit dem Zoomtrieb des Stereomikroskops mechanisch oder elektrisch gekoppelt sein , d. h. mit Betätigung des Beobachtungs - Zoomsystems wird der beleuchtete Objektfelddurchmesser automatisch variabel angepaßt,

Dieses Beleuchtungsprinzip eignet sich weiterhin für mikroskopische Kontrastverfahren. In Fig. 6 wird beispielhaft die Anordnung für die Fluoreszenzanregung über die Spot Beleuchtungseinrichtung dargestellt. Werden ausgehend von den in Fig. 4 oder Fig. 5 beschriebenen Anordnungen zwischen Lichtleiterendstück ST und Lichtquelle LQ eine Filteraufnahme FAA zur Aufnahme und Wechsel von Filtern, bei Fluoreszenzanregung zur Aufnahme und Wechsel von Anregungsfiltern A, zwischengeschaltet (diese Filterwechselstelle ist bei vielen auf dem Markt befindlichen Lichtquellen - insbesondere bei Kaltlichtquellen - bereits vorhanden), ist eine Fluoreszenzanregung über die Spot - Fokussieroptiken FO möglich. Wird weiterhin in die Beobachtungskanäle eine Filteraufnahme für Sperrfilter FAS zum Wechsel von Sperrfiltern S untergebracht, kann mit sehr gutem stereoskopischem Fluoreszenzkontrast beobachtet werden, d. h. durch die vollständige Entkopplung von Beleuchtungs- und Beobachtungskanälen ist eine durch schräge Beleuchtung kontrastreiche und reflexfreie Beobachtung möglich. Als Lichtquellen eignen sich für Fluoreszenzanregungen im sichtbaren Spektralbereich Halogen Kaltlichtquellen (z. B. SCHOTT - Kaltlichtquelle KL 1500) oder XBO (Xenon - Höchstdrucklampen, z. B. XBO 75 W) für UV- Fluoreszenzanregungen HBO (Quecksilber - Höchstdrucklampen, z. B. HBO 50 W oder HBO 100 W). Für die unterschiedlichsten Applikationsaufgaben der Fluoreszenzstereomikroskopie werden von Filterherstellern bzw. Stereomikroskopherstellern eine ganze Reihe verschiedenartiger Filtersets (bestehend aus Anregungs- und Sperrfiltern) angeboten. Vorteilhaft für die stereomikroskopische Beobachtung in beliebiger Raumrichtung (z. B. Sonderstative für Restaurateure) mit Fluoreszenzanregung ist die Lichteinkopplung über Lichtleiter, da die o. g. Höchstdrucklampen bei einer starren Ankopplung an das Stereomikroskop ohne Lichtleiter durch ihre erhebliche Wärmeentwicklung (Verbrennungsgefahr bei Berührung) den Beobachter stören würde und außerdem die Höchstdrucklampen It. Herstellerangabe immer nur in einer vertikalen Einbaulage betrieben werden dürfen (bei starken Neigungen kommt es zur Zerstörung dieser Lampen). In der erfindungsgemäßen Anordnung nach Fig. 6 kann die Lichtquelle an einem festen Ort (beispielsweise am Sonderstativ befestigt) verbleiben und das Stereomikroskop kann - über den Lichtleiter mit der Lichtquelle verbunden - beliebig im Raum orientiert werden.

### Erprobungsergebnisse:

Es erfolgte die Integration einer Auflichtbeleuchtung - wie in Fig. 1 bis Fig. 4 dargestellt - in den ZEISS - Stemi 1000 - Grundkörper unter Beibehaltung des Arbeitsabstandes von 4" (110 mm).
Die beiden Beleuchtungsoptiken - in Nord - Süd - Richtung angeordnet - wurden unter einem Winkel von 2 x 8* positioniert, um eine schräge Auflichtbeleuchtung mit einer weitgehenden Entkopplung von den Beobachtungskanälen zu realisieren. Mit dieser Anordnung wurde eine wesentlich bessere Bildgüte (keine störenden Auflichtreflexe im oberen Zoombereich) als bei aufwendigen koaxialen Auflichtbeleuchtungsanordnungen (Reflexminimierung mit polarisationsoptischen Mitteln) erreicht.

Folgende Leistungsmerkmale wurden am Prototypen nachgewiesen:
a)
   Helle, homogene Ausleuchtung, Beleuchtung mit SCHOTT KL 1500e - Kaltlichtquelle; am Prototypen wurde ein Beleuchtungs - Winkel von 2x8° realisiert, damit konnte ein wesentlich kleinerer Beleuchtungswinkel als bei extern angesetzten Leuchten mit sehr schrägem Lichteinfall (z. B. SCHOTT - Punkt- bzw. Ringlicht: 18°, Leuchte 10: 35°) erzielt werden,
b)
   Wesentlich kontrastreichere Beleuchtung als klassische, koaxiale Beleuchtungsanordnungen mit Strahlenteilung (Beleuchtungswinkel 0°, Problem der auf-hellenden Einfachreflexe, die sich trotz Antiflex - Anordnung nicht vollständig elimi-nieren lassen) durch vollständige Trennung der Beobachtungs - und Beleuchtungsstrahlengänge,
c)
   Durch die vollständige Integration der Beleuchtung in den Stereomikroskop - Grundkörper bleibt der volle Arbeitsabstand (4" beim Stemi 1000) erhalten: Vorteil gegenüber extern angesetzten Kaltlicht - Komponenten, durch die der Arbeitsabstand eingeschränkt und die direkte, freie Sicht auf das Beobachtungsobjekt verbaut wird,
d)
   Alle äußeren Stereomikroskop - Schnittstellen bleiben erhalten (Ø 76 mm als International standardisierter Aufnahme - 0, Aufnahme - 0 für externe Kaltlicht - Komponenten, Koppel - Gewinde für Vorsatzsysteme), damit gibt es keine Einschränkungen der bisherigen Variabilität,
e)
   Durch die Integration braucht die Beleuchtung bei wechselnden Beobachtungsorten (z. B. Sonderstative für MEG - Anwendungen, Durchmusterung großer Objektfelder mit Auslegerstativen z. B. in der Textilbranche, Restauratorstative mit beliebigen Raumorientierungen des Stereomikroskop - Grundkörpers) nicht nachgeführt werden und die freie Sicht zum Objekt bleibt erhalten,
   Aufgrund des außerordentlich gedrängten Stereomikroskop - Grundaufbaus werden folgende Alternativen in Abwandlung der o. g. Ausführungsbeispiele (Fig. 1 bis Fig. 4) bei notwendigen konstruktiven Einschränkungen für die Spot - Beleuchtung gesehen:
   - Verzicht auf einen Beleuchtungskanal, Beleuchtung nur mit einem "Spot" aus N - oder S - Richtung,
   - Anstelle des flexiblen Lichtleiters könnte auch bei ausreichender Lichtausbeute ein Lichtleitstab bzw. ein innenverspiegeltes Lichtleitrohr angewendet werden, an dem am oberen Ende wechselbar (bei vertretbarem Transmissionsverlust ein Vorteil !) ein flexibler Standardlichtleiter (z. B. für KL 200) eingekoppelt werden kann.
   - Verzicht auf die Fokussieroptik, d. h. durch die hohe Lichtleiterapertur (A ≈ 0.66 bei Faser - Typ A2) wird bei einem freien Arbeitsabstand von 90 mm ein Objektfeld von ≈ 160 mm ausgeleuchtet (relativ homogene Ausleuchtung ≈ 0 100 mm), die im Sehfeld sichtbare Beleuchtungsstärke ist dann insbesondere im oberen Zoombereich spürbar geringer als bei einer angepaßten Ausleuchtung des Objektsehfeldes, sie wird aber noch als ausreichend eingeschätzt (Vorteil der großflächigen Ausleuchtung des Objektfeldes bei Objektmanipulation und -positionierung mit bloßem Auge, d. h. das "Licht" liefert immer das Stemi).

## Patentansprüche

1. Beleuchtungsanordnung eines Stereomikroskops (MI), vorzugsweise vom Greenough-Typ, welches zwei Beobachtungskanäle (B1, B2) aufweist, bestehend aus zwei, in einer bezüglich der durch die Ebene der beiden Beobachtungskanäle (B1, B2) im wesentlichen orthogonal angeordneten Ebene angeordneten Beleuchtungskanälen (BL1, BL2),
wobei die Beleuchtungskanäle (BL1, BL2) im Innern des Mikroskopgehäuses außerhalb der Beobachtungskanäle (B1, B2) verlaufen,
**dadurch gekennzeichnet,**
**dass** die Beleuchtungskanäle (BL1, BL2) zur Vermeidung von Reflexen um einen Winkel von 8 Grad bis 12 Grad gegen die Ebene der Beobachtungskanäle (B1, B2) geneigt sind,
**dass** die Beleuchtung über mindestens einen Lichtleiter erfolgt,
**dass** die Beleuchtung über eine dem Lichtleiterende nachgeordnete Beleuchtungsoptik erfolgt
und
**dass** die Beleuchtungsoptik bezüglich des Abbildungsmaßstabes als Zoomsystem verstellbar und/oder verschiebbar und/oder verschwenkbar angeordnet ist.

2. Beleuchtungsanordnung nach Anspruch 1, wobei eine Führung der Lichtkanäle um die Beobachtungsoptik herum erfolgt.

3. Beleuchtungsanordnung nach mindestens einem der Ansprüche 1-2
wobei die Beleuchtungsrichtung in einem Winkel zur optischen Achse des Mikroskops erfolgt, so dass kein direktes Licht in die Beobachtungskanäle fällt.

4. Beleuchtungsanordnung nach Anspruch 1, wobei der lichtleiter ein flexibler Glas - Lichtleiter und / oder Kunststoff-Lichtleiter und/oder Flüssig-Lichtleiter ist.

5. Beleuchtungsanordnung nach einem der Ansprüche 1 bis 4, wobei der Lichtleiter zumindest teilweise im Innem des Mikroskopgehäuses verläuft

6. Beleuchtungsanordnung nach einem der Ansprüche 1 bis 5, wobei die Beleuchtung über die Lichtleiterenden erfolgt.

7. Beleuchtungsanordnung nach einem der Ansprüche 1 bis 6, wobei zur Verstellung der Beleuchtungsoptik eine handbetätigbare und / oder motorisch betätigbare Ansteuerung vorgesehen ist.

8. Beleuchtungsanordnung nach einem der Ansprüche 1 bis 7, wobei bei Verstellung der Beleuchtungsoptik als Zoomsystem eine Kopplung dieser Verstellung mit der Verstellung des Mikroskop-Zoomsystems erfolgt.

9. Beleuchtungsanordnung nach mindestens einem der vorangehenden Ansprüche, wobei die Beleuchtung über einen Lichtleiter, der sich zur Erzeugung der zwei Lichtkanäle verzweige erfolgt.

10. Beleuchtungsanordnung nach Anspruch 9, wobei die Verzweigung sich vollständig im Innem des Mikroskopgehäuses befindet.

11. Beleuchtungsanordnung nach einem der Ansprüche 9 oder 10,
wobei die Abzweigungen des Lichtleiters um die Beobachtungskanäle herum geführt sind.

12. Beleuchtungsanordnung nach mindestens einem der Ansprüche 1 bis 11, wobei der Lichtleiter mit einer außerhalb des Mikroskops angeordneten Kaltlichtquelle verbunden ist.

13. Anwendung einer Beleuchtungsanordnung nach mindestens einem der vorangehenden Ansprüche, wobei über den oder die Beleuchtungskanäle eine Fluoreszenzanregung erfolgt.

14. Beleuchtungsanordnung nach einem der Ansprüche 1 bis 12, wobei mindestens ein Lichtleiter mit einer außerhalb des Mikroskops angeordneten Lichtquelle, die für Fluoreszenzanregungen in Kombination mit wechselbaren Anregungsfiltern geeignet ist, verbunden ist.

15. Beleuchtungsanordnung nach einem der Ansprüche 1 bis 12 oder 14,
wobei zwischen der Lichtquelle und dem Lichtleiter eine Filteraufnahme für Anregungsfilter und im Beobachtungsstrahlengang eine Filteraufnahme für Sperrfilter vorgesehen ist.

## Claims

1. Illumination system for a stereomicroscope (MI), preferably of the Greenough-type, which has two observation channels (B1, B2), consisting of two illumination channels (BL1, BL2) disposed in a plane which is disposed substantially orthogonal with respect to the plane defined by the two observation channels (B1, B2), wherein the illumination channels (BL1, BL2) extend inside the microscope housing outside the observation channels (B1, B2),
**characterized in that**
in order to avoid reflections the illumination channels (BL1, BL2) are inclined by an angle of 8 degrees to 12 degrees with respect to the plane of the observation channels (B1, B2),
the illumination is effected via at least one light conductor,
the illumination is effected via illumination optics disposed downstream of the light conductor end,
and
the illumination optics are disposed as a zoom system so as to be adjustable and/or displaceable and/or pivotable with respect to the imaging scale.

2. Illumination system as claimed in claim 1,
wherein the light channels are guided about the observation optics.

3. Illumination system as claimed in at least one of claims 1 - 2,
wherein the illumination direction forms an angle with respect to the optical axis of the microscope so that no direct light enters the observation channels.

4. Illumination system as claimed in claim 1,
wherein the light conductor is a flexible glass light conductor and/or synthetic material light conductor and/or liquid light conductor.

5. Ilumination system as claimed in any one of claims 1 to 4,
wherein the light conductor extends at least partially inside the microscope housing.

6. Illumination system as claimed in any one of claims 1 to 5,
wherein the illumination is effected via the light conductor ends.

7. Illumination system as claimed in any one of claims 1 or 6,
wherein in order to adjust the illumination optics a manually operable and/or motor-operable control is provided.

8. Illumination system as claimed in any one of claims 1 to 7,
wherein during adjustment of the illumination optics as a zoom system this adjustment is coupled to the adjustment of the microscope zoom system.

9. Illumination system as claimed in at least one of the preceding claims,
wherein the illumination is effected via a light conductor which branches to produce the two light channels.

10. Illumination system as claimed in claim 9,
wherein the branching is located completely inside the microscope housing.

11. Illumination system as claimed in any one of claims 9 or 10,
wherein the branches of the light conductor are guided about the observation channels.

12. Illumination system as claimed in at least one of claims 1 to 11,
wherein the light conductor is connected to a cold light source disposed outside the microscope.

13. Use of an illumination system as claimed in at least one of the preceding claims,
wherein by means of the illumination channel(s) a fluorescence excitation is effected.

14. Illumination system as claimed in any one of claims 1 to 12,
wherein at least one light conductor is connected to a light source which is disposed outside the microscope and which is suitable for fluorescence excitations in combination with exchangeable excitation filters.

15. Illumination system as claimed in any one of claims 1 to 12 or 14,
wherein between the light source and the light conductor a filter receiver for excitation filters is provided and in the observation beam path a filter receiver for blocking filters is provided.

## Revendications

1. Dispositif d'éclairage d'un stéréomicroscope (MI), de préférence du type Greenough, qui présente deux canaux d'observation (B1, B2),
comprenant deux canaux d'éclairage (BL1, BL2) disposés dans un plan disposé sensiblement perpendiculairement par rapport au plan des deux canaux d'observation (B1, B2),
les canaux d'éclairage (BL1, BL2) étant agencés à l'intérieur du boîtier de microscope à l'extérieur des canaux d'observation (B1, B2),
**charactérisé**
en ce que les canaux d'éclairage (BL1, BL2) étant inclinés, afin d'éviter des reflets, d'un angle de 8 degrés à 12 degrés par rapport au plan des canaux d'observation (B1, B2),
en ce que l'éclairage s'effectuant au moyen d'au moins un guide de lumière,
en ce que l'éclairage s'effectuant par une optique d'éclairage placée en aval de l'extrémité du guide de lumière,
et
en ce que l'optique d'éclairage pouvant être réglée et/ou déplacée et/ou basculée par rapport à l'échelle de reproduction comme système de zoom.

2. Dispositif d'éclairage selon la revendication 1, un guidage des canaux de lumière s'effectuant autour de l'optique d'observation.

3. Dispositif d'éclairage selon au moins l'une des revendications 1 et 2,
le sens d'éclairage s'effectuant dans un angle par rapport à l'axe optique du microscope, de sorte qu'aucune lumière directe ne tombe dans les canaux d'observation.

4. Dispositif d'éclairage selon la revendication 1, le guide de lumière étant un guide de lumière en verre flexible et/ou un guide de lumière en plastique et/ou un guide de lumière liquide.

5. Dispositif d'éclairage selon l'une quelconque des revendications 1 à 4,
le guide de lumière étant agencé au moins partiellement à l'intérieur du boîtier de microscope.

6. Dispositif d'éclairage selon l'une quelconque des revendications 1 à 5, l'éclairage s'effectuant par les extrémités du guide de lumière.

7. Dispositif d'éclairage selon l'une quelconque des revendications 1 à 6,
une commande pouvant être actionnée à la main et/ou par moteur étant prévue pour le réglage de l'optique d'éclairage.

8. Dispositif d'éclairage selon l'une quelconque des revendications 1 à 7,
un couplage de ce réglage avec le réglage du système de zoom du microscope s'effectuant en cas de réglage de l'optique d'éclairage comme système de zoom.

9. Dispositif d'éclairage selon au moins l'une quelconque des revendications précédentes, l'éclairage s'effectuant au moyen d'un guide de lumière qui se ramifie pour générer les deux canaux de lumière.

10. Dispositif d'éclairage selon la revendication 9,
la ramification se trouvant complètement à l'intérieur du boîtier de microscope.

11. Dispositif d'éclairage selon l'une des revendications 9 ou 10,
les ramifications du guide de lumière étant guidées autour des canaux d'observation.

12. Dispositif d'éclairage selon au moins l'une quelconque des revendications 1 à 11, le guide de lumière étant relié à une source de lumière froide disposée l'extérieur du microscope.

13. Application du dispositif d'éclairage selon au moins l'une quelconque des revendications précédentes,
une excitation de fluorescence s'effectuant par le ou les canaux d'éclairage.

14. Dispositif d'éclairage selon l'une quelconque des revendications 1 à 12,
au moins un guide de lumière étant relié à une source de lumière disposée à l'extérieur du microscope, qui convient pour des excitations de fluorescence en combinaison avec des filtres d'excitation amovibles.

15. Dispositif d'éclairage selon l'une quelconque des revendications 1 à 12 ou 14,
un logement de filtre pour des filtres d'excitation étant prévu entre la source de lumière et le guide de lumière et un logement de filtre pour filtre de blocage étant prévu dans le trajet du faisceau d'observation.
